# EUROPEAN PATENT APPLICATION

(11) **EP 3 694 295 A1**
(43) Date of publication of application: **12.08.2020**
(21) Application number: 20155543.0
(22) Date of filing: 05.02.2020
(51) Int. Cl.: H05B 3/42, A47J 31/54

(54) **FLOW THROUGH HEATING DEVICE AND CORRESPONDING PRODUCTION METHOD**

(30) Priority: 05.02.2019 IT 201900001651
(71) Applicant: De' Longhi Appliances S.r.l. Con Unico Socio, 31100 Treviso (IT)
(72) Inventor: EVANGELISTI, Paolo, 31100 TREVISO (IT); PIOVAN, Nicola, 31100 TREVISO (IT)
(74) Representative: Petraz, Gilberto Luigi

(57) **Abstract**

The present invention concerns a heating device for a liquid, and the corresponding method to produce it. The heating device comprises a support body (11), which develops along a longitudinal axis (X), and is provided with at least three through holes, one central and two lateral, which develop parallel and adjacent to each other along the longitudinal axis (X), defining a central channel (12) for the passage of the liquid to be heated and two lateral compartments (13, 14), at least one heating element (15) disposed in at least one of the lateral compartments (13, 14).

## Description

### FIELD OF THE INVENTION

The present invention concerns a flow through heating device, also known as flow through heater, which is normally disposed along a hydraulic circuit, defining one part thereof, to heat a fluid, in particular a liquid, even more in particular water, which transits inside it.

The present invention also concerns a method to produce a flow through heating device.

### BACKGROUND OF THE INVENTION

In various fields and sectors of the state of the art, the use of flow through heating devices, also known as "instant boilers" or "flow through heaters", is known, which are disposed along a hydraulic circuit, defining a segment thereof, and which heat a liquid, for example water, passing through them.

For example, the use of heating devices of the type in question is known in automatic machines for preparing hot drinks, such as for example tea and coffee. In these machines, the water has to be brought to a certain temperature, for example around 90-100 °C to make coffee, or 120-140 °C to produce steam. The characteristic of these heating devices is that they have to reach the desired temperatures in the short period of time between the entry and exit of the water into/from the device. Therefore, these devices have to have a low thermal inertia and possibly allow, in the shortest time possible, the passage from a heating function for preparing coffee to a heating function for generating steam.

To avoid having to use excessively long pipes, it is necessary for the heat exchange between the heating element and the water in transit to be particularly efficient.

Flow through heating devices are known which typically comprise a drawn aluminum body with three through holes, one central and two lateral, a conduit, generally made of steel, inserted in the central hole and subsequently brazed, and heating resistances which are inserted and fixed in the lateral holes.

The aluminum body generally has a plurality of holes or slits through which it is possible to insert the weld material necessary to weld the steel conduit to the aluminum body.

The process to produce such a heating device involves a plurality of working steps, including:
- extrusion of the aluminum body;
- mechanical machining of the aluminum body to obtain the desired shape and size of the through holes;
- insertion of the resistances in the lateral holes, and filling of the possible empty spaces with a suitable material, generally an oxide;
- insertion of the steel conduit in the central hole;
- assembly of the aluminum body, and possible mechanical pressing to constrain it to the components inserted inside it;
- one or more passages in an oven in order to fix the filling material and stabilize the components;
- final finishing and edging of the stainless steel tube;
- assembly of the temperature detection devices.

The problems that occur in the production of these types of devices are mainly correlated to the long production time in the brazing step and the repeatability of the operations. In addition, the brazing process used to join the steel conduit and the aluminum body together does not guarantee a reciprocal coupling on the entire surface of the two components.

Another disadvantage is the difficulty of assembling the temperature detection devices, or devices of another type, the supports of which have to be joined to the aluminum body by means of welding or brazing, with the same problems of uniform contact.

Another production method known in the state of the art provides to use a process of extrusion of an aluminum body and subsequent application, by pressing, of heating resistances and other support parts on the extruded body. The process is very economical but even in this case it presupposes the use of weld materials and various passages in the oven.

Yet another production method provides to use a mold, having the external shape of the aluminum body, and provided with a plurality of supports protruding toward the inside, to dispose a conduit and the branches of the heating elements on the supports, insert a metal core having the desired shape inside the conduit, close the mold and inject inside it, at high pressure, aluminum or its alloys in the molten state so as to coat the conduit and the branches of the heating elements.

Even this solution, however, requires a plurality of operative steps and therefore long working times; in addition, the use of a mold limits the shape and size of the heating devices that can be made.

Another disadvantage of the flow through heating devices known in the state of the art is the limescale which tends to settle on the internal walls, reducing the usable section for the transit of the water. In order to keep these heating devices efficient, during use, it is necessary to provide suitable filtering devices and possibly subject the heating devices to washing with suitable descaling agents.

In flow through boilers, on the one hand, narrow passages have to be provided for the liquid to be heated in order to improve heat exchange, on the other hand, however, there has to be a large passage section in order to guarantee its functioning even when deposits of limescale occur.

The solutions known in the state of the art, to date, do not solve the problem of limescale accumulation, with consequent problems of obstructions and a need for frequent maintenance.

Therefore, there is a need to provide a device for heating, in a substantially instantaneous manner, a flow of water in transit which overcomes the disadvantages of the state of the art.

One purpose of the present invention is to provide a heating device that is compact, economical, and which allows a high and efficient heat exchange between the heating elements and the liquid in transit.

Another purpose of the present invention is to provide a heating device which allows to easily remove the limescale that can deposit on the internal surfaces, so as to prevent possible problems of obstruction of the channel for the passage of the liquid.

Another purpose of the present invention is to perfect a method to produce a heating device which allows to speed up and increase the efficiency of the production process.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

Embodiments described here concern a heating device, in particular of the flow through type, suitable to heat, in a substantially instantaneous manner, a liquid in transit through it, for example water, but not only.

The heating device according to the present invention comprises a support body which develops along a longitudinal axis and is provided with at least three through holes, one central and two lateral, which develop parallel and adjacent to each other along the longitudinal axis, defining respectively a central channel for the passage of the liquid to be heated, and two lateral compartments; at least one heating element disposed in at least one of the lateral compartments.

According to one aspect of the present invention, the support body is made as a single block and comprises a continuous external surface and an internal surface, which, during use, is directly in contact with the liquid to be heated.

In other words, the support body itself defines the passage channel for the liquid to be heated, that is, there is no other conduit attached inside the support body.

According to some embodiments, the support body is made of a material with high thermal conductivity and suitable to be located in contact with the liquid to be heated, also for use with foodstuff.

According to some embodiments, the support body is made of copper.

The use of a material with high thermal conductivity such as copper also allows to reduce the problem of calefaction that generally occurs in flow through heating devices.

According to other embodiments, in the support body there is provided at least one housing seating which develops along the longitudinal axis and is configured to house at least one temperature detection device.

According to some embodiments, the at least one housing seating is made as a through channel which extends inside the support body.

According to other embodiments, the at least one housing seating is made as a groove which extends along the support body in the external surface thereof.

According to possible variants, two or more housing seatings can be provided, of one or of the other type, or of both.

Since the detection devices are located inside the support body, or in any case in direct contact with it in the proximity of the heat exchange zone between the heating element and the central channel where, during use, the liquid to be heated transits, a more precise and reliable temperature detection is achieved than in known solutions.

In addition, positioning the detection devices at least partly inside the support body allows to make the heating device more compact.

According to other embodiments, the heating device comprises portions made along the central channel in the direction of extrusion, which protrude toward the center of the channel itself. The protruding portions define zones that facilitate and assist the deposit of limescale, which will therefore tend to deposit and concentrate on them in a preferential manner, thus allowing a simpler removal thereof.

Furthermore, the protruding portions have a shape such that, in combination with the thermal expansion of a material with high conductivity, such as copper, they tend to break the limescale formation in the passage zone, extending the useful life of the heating device.

According to possible variants, the heating device can have a substantially rectilinear conformation along the longitudinal axis.

According to other variants, the boiler can have a conformation that is bent along the longitudinal axis, for example in the shape of an "L", a "J", a "U", a "C" or suchlike.

Embodiments described here also concern a method to produce a flow through heating device.

The method according to the invention provides to:
- extrude a support body having an oblong development along a longitudinal axis and provided with at least three through holes, one central and two lateral, which develop parallel and adjacent to each other along the longitudinal axis, defining a central channel for the passage of the liquid to be heated, and two lateral compartments, wherein the support body comprises a continuous external surface and an internal surface, which delimits the central channel and is, during use, directly in contact with the liquid to be heated;
- insert at least one heating element into at least one of the lateral compartments;
- fill the space of each lateral compartment around the heating element with a conductive filling material and heat-treat the support body with the heating element and the filling material disposed therein in order to obtain a single piece component.

Since the central hole of the support body itself defines the passage channel for the liquid, the production of the heating device is faster than traditional solutions. Furthermore, a repeatability of the working operations and therefore of the final product is guaranteed, without the problems caused by brazing the components.

According to some embodiments, the method also provides, during the extrusion of the support body, to make a housing seating inside the latter, which develops parallel to the longitudinal axis, in order to define a housing seating suitable to house at least one detection device.

According to some embodiments, the housing seating can be made as a groove on the surface of the support body, or as a through channel that develops inside the support body itself.

According to other embodiments, the method provides to insert at least one temperature detection sensor into the housing seating and to clamp it in the latter by means of a clamping member.

Making the housing seatings directly in the support body during the extrusion step thereof simplifies and at the same time optimizes the positioning of the detection devices, without needing to provide dedicated supports and seatings outside the support body, with further savings in production times and costs.

According to other embodiments, the method can provide a step of bending the heating device with respect to the longitudinal axis, so as to confer upon it a shape bent like an "L", a "J", a "U", a "C" or suchlike, as a function of the applications of the heating device.

### ILLUSTRATION OF THE DRAWINGS

These and other characteristics of the present invention will become apparent from the following description of some embodiments, given as a non-restrictive example with reference to the attached drawings wherein:
- fig. 1 is a schematic cross section of a flow through heating device according to embodiments described here;
- fig. 2 is a schematic cross section of a flow through heating device according to variants of embodiments described here;
- fig. 3 is a schematic cross section of a flow through heating device according to other variants of embodiments described here;
- fig. 4 is a perspective view of the support body of the flow through heating device in fig. 2;
- fig. 5 is a partial perspective view of a heating device according to other embodiments described here;
- fig. 6 is a partial perspective view of a heating device according to further embodiments described here;
- fig. 7 is a lateral view of a heating device according to one variant;
- fig. 8 is a lateral view of a heating device according to the invention according to another variant;
- fig. 9 is a lateral view of a heating device according to the invention according to a further variant.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF EMBODIMENTS

We will now refer in detail to the various embodiments of the invention, of which one or more examples are shown in the attached drawings. Each example is supplied by way of illustration of the invention and shall not be understood as a limitation thereof.

Embodiments described here concern a heating device 10 of the flow through type, also known as an "instant boiler" or also "flow-through heater", normally used to heat, in a substantially instantaneous manner, a fluid in transit, in particular but not only water.

The heating device 10 can be used, for example, in machines for preparing infused beverages, such as tea, coffee or suchlike, to heat the water in transit in a hydraulic circuit upstream of the infusion chamber in which an aromatic substance is located.

The heating device 10 comprises a support body 11 having an oblong development which develops along a longitudinal axis X, and is provided with at least three through holes, one central and two lateral, which develop parallel and adjacent to each other along the axis X.

The three through holes define, respectively, a central channel 12 for the passage of the liquid to be heated, and two lateral compartments 13, 14.

According to some embodiments, the central axes of the three through holes 12, 13, 14 are disposed on a common lying plane P.

According to one aspect of the present invention, the support body 11 is made as a single block.

According to some embodiments, the support body 11 has a constant section along the longitudinal axis X.

According to some embodiments, the support body 11 has a continuous external surface 22, that is, free of slits, holes or removed parts.

According to some embodiments, the support body 11 is made of a metal material having high thermal conductivity, and suitable to be located directly in contact with the water in transit.

According to some embodiments, the support body 11 is made of copper.

According to other embodiments, the support body 11 is made of aluminum or other suitable material.

According to some embodiments, the central channel 12 of the support body 11 itself defines the passage channel for the liquid to be heated.

In other words, the liquid to be heated, during use, is located directly in contact with an internal surface 19 of the support body 11 which delimits the central channel 12.

The lateral compartments 13, 14, each located on one side of the central channel 12, are configured to each house at least one heating element 15, for example a resistance.

According to some embodiments, the heating element 15 is kept in position and clamped inside the respective lateral compartment 13, 14 by means of a filling material 16, for example conductive oxide.

Thanks to the fact that the support body 11 is located directly in contact with the liquid to be heated, without needing to provide another tube, as in known solutions, the heat exchange between the heating elements 15 and the liquid in transit in the central channel 12 is optimized.

This leads to a better performance of the heating device 10, so that, with the same heating temperature, it is possible to use a lower power to power the heating elements 15.

According to some embodiments, the support body 11 comprises a housing seating 17, disposed substantially parallel to the longitudinal axis X, configured to house at least one detection device 18 inside it, for example a sensor suitable to detect temperature.

According to some embodiments, the detection device 18 can be a cylindrical sensor 18a.

According to some embodiments, the detection device 18 can be a TCO temperature sensor 18b, an NTC (Negative Coefficient Temperature) resistance, or other sensor suitable for the purpose.

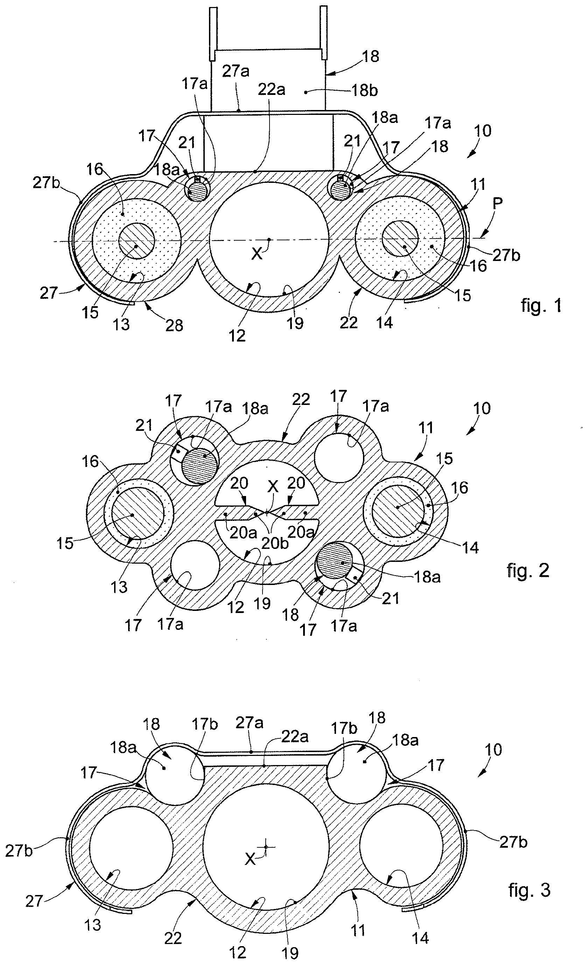

According to some embodiments, for example described with reference to figs. 1, 2 and 4, the housing seating 17 can be made as a through channel 17a which develops inside the support body 11. In this case, access to the housing seating with through channel 17a can only occur through the ends of the support body 11.

According to other embodiments, the housing seating 17 can be made as a hollow or a groove 17b which develops on the external surface 22 of the support body 11. In this case, it is possible to access the housing seating with groove 17b at any point along its longitudinal extension.

According to some embodiments, the groove 17b can have a semicircular shape, mating with the shape of a cylindrical sensor 18a, so as to have the largest possible usable heat exchange surface.

According to further embodiments, for example described with reference to figs. 1, 3, 5 and 6, the external surface 22 can comprise a flat portion 22a configured to define a support surface for a detection device 18, for example a TCO sensor 18b.

According to some embodiments, the housing seating 17 can be disposed in a position adjacent to the central channel 12, so as to obtain a precise detection of the temperature of the water in transit inside it.

These housing seatings 17 make it simple to position and clamp the detection devices 18 inside them.

According to some embodiments, the detection device 18 can be disposed in any position whatsoever inside a housing seating 17.

The detection device 18 can possibly be clamped and kept in position by means of a clamping member 21, 27.

According to some embodiments, the clamping member can comprise an elastic element 27, or a spring, having an intermediate portion 27a suitable to be located in contact with the detection devices 18, and elastic arms 27b suitable to cooperate with the support body 11 in order to constrain and hold the detection devices 18 in position. The elastic element 27 can be applied simply and quickly onto the support body 11 to constrain the detection devices 18 by means of simple deformation and subsequent restoration of the conformation of the elastic arms 27b, obtaining a same shape coupling without needing to provide brazing or other workings.

According to further embodiments, the clamping members 21 can also be defined by means of localized deformations of the support body 11 and of the respective housing seatings 17, in particular of those with through channel 17b.

According to possible solutions, two or more detection devices 18 can be provided disposed inside a housing seating 17, for example in correspondence with the two ends of the latter.

According to variant embodiments, two or more housing seatings 17 can be provided, each suitable to contain one or more detection devices 18.

According to some embodiments, each housing seating 17 is positioned in a position adjacent on one side to the central channel 12 and on the other to one of the lateral compartments 13, 14.

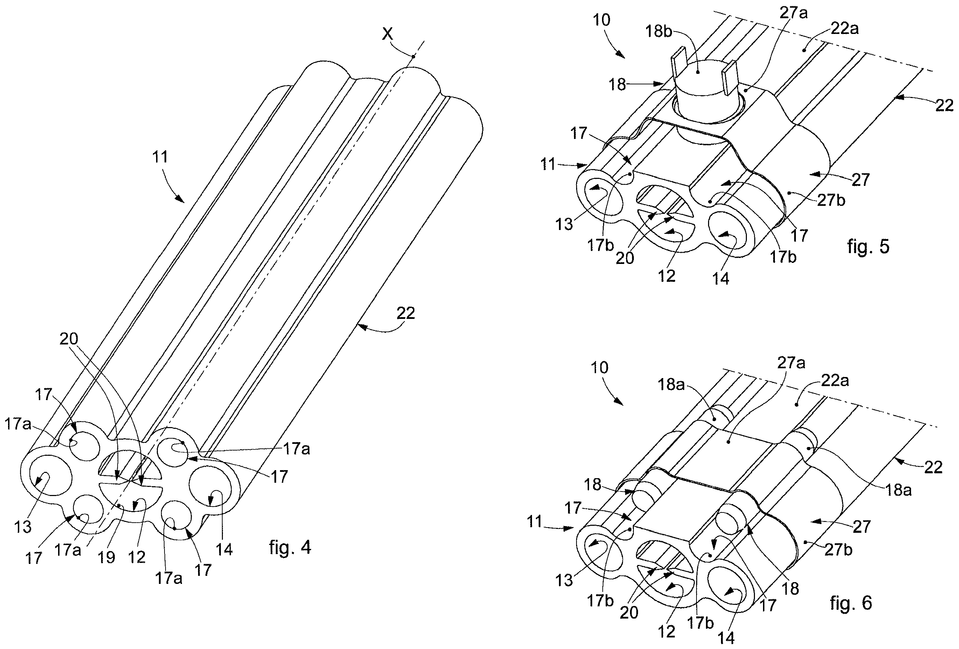

By way of example, figs. 1, 3, 5 and 6 show two housing seatings 17, while figs. 2 and 4 show four of said seatings 17.

It is understood that the number or position of the housing seatings 17 can vary according to needs and to the expected number of detection devices 18. For example, there can be provided two housing seatings 17 located on the same side or on opposite sides of the central channel 12, or possibly an odd number of housing seatings 17, for example three, two of which are disposed on one side and the remaining one on the opposite side.

According to some embodiments, the central channel 12 can have a cylindrical shape.

According to variants, protruding portions 20 can be present which protrude toward the inside of the central channel 12, able to facilitate the accumulation of limescale on them, so as to keep the remaining portion of the internal surface 19 as clean as possible.

In this way, it is possible to prevent possible obstructions of the central channel 12 and at the same time guarantee an effective heat exchange between the heating elements 15, the support body 11 and the water in transit in the central channel 12.

According to some embodiments, two protruding portions 20 can be provided which extend from opposite positions to each other, and converge toward the center of the central channel 12, however as a function of requirements there can also be a higher number of them.

The protruding portions 20 can be disposed on the same plane or on planes inclined with respect to each other.

The protruding portions 20 define zones on which the limescale will tend to deposit in a preferential manner, concentrating on them and thus allowing an easier removal of the limescale itself.

According to some embodiments, the protruding portions 20 are made in a single piece with the support body 11, with the same material with high thermal conductivity.

According to some embodiments, the protruding portions 20 have a flat portion 20a with a constant section, and a free end 20b with a section decreasing toward the inside of the central channel 12, for example pointed.

The shape of the protruding portions 20, in combination with the thermal expansion of the material with high thermal conductivity, in particular of the copper, promotes the breakdown of the limescale formation in the passage zone, lengthening the useful life of the heating device 10. According to some embodiments, the protruding portions 20 extend for the entire length of the central channel 12.

According to further embodiments, the heating device 10 can have a substantially rectilinear conformation along the longitudinal axis X.

According to possible variants, for example described with reference to figs. from 7 to 9, the heating device 10 can have a curved or bent shape with respect to the longitudinal axis.

As a function of requirements, the heating device 10 can have one or more bending zones 23 along the longitudinal axis X.

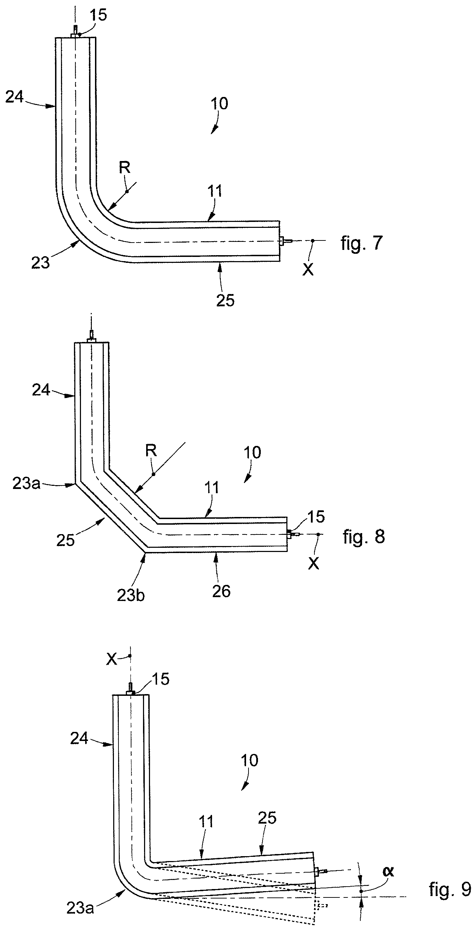

By way of example, fig. 7 shows a heating device 10 with a substantially L-shaped shape, with a single bending zone 23 which defines two segments 24, 25 disposed angled with respect to each other.

The bending zone 23 can have a radius of curvature R which, by way of example, and also as a function of the length of the heating device, can vary between about 1cm and about 4cm.

According to some variants, for example described with reference to fig. 8, the heating device 10 can have a C-shaped, or inverted U-shaped, conformation, defined by two bending zones 23a, 23b, disposed along the longitudinal axis X, which define three segments 24, 25, 26 disposed angled with respect to each other.

According to other variants, for example described with reference to fig. 9, the heating device 10 can also have a single bending zone 23 with the respective segments 24, 25 disposed angled with respect to each other by an angle α, for example comprised between 80° and 100°.

Embodiments described here also concern a method to produce a heating device 10.

The method according to the invention provides to extrude a support body 11 made of metal material, comprising three through holes, one central and two lateral, defining a central channel 12 and two lateral compartments 13, 14 disposed on one side and on the other of the channel central 12, which develop parallel to each other along a longitudinal axis X.

According to some embodiments, the method provides to make the support body 11 of copper.

According to possible variants, the method provides to make the support body 11 of aluminum or other material having high thermal conductivity.

The support body 11 itself therefore defines the passage conduit for a liquid inside it, which, during use, transits through the central channel 12.

According to some embodiments, the method also provides to position, in each lateral compartment 13, 14, a heating element 15 configured to heat, during use, the support body 11 and the liquid in transit through the central channel 12.

According to some embodiments, the method further provides to fill the space of each lateral compartment 13, 14, around the heating element 15 with a conductive filling material 16, for example an oxide, so as to position the heating element 15 in a stable manner.

According to some embodiments, the method provides to heat-treat the support body 11 with the heating elements 15 and the filling material 16 already disposed inside it, for example by means of one or more passes in a suitable oven, in order to fix the filling material 16 and stabilize the heating elements 15, thus obtaining a single piece component.

According to further embodiments, during the extrusion step, the method provides to make a through channel in the support body 11 which develops along the longitudinal axis X, parallel and adjacent to the central channel 12, in order to define at least one housing seating 17 for the detection devices 18.

According to some embodiments, the method provides to insert at least one detection device 18 inside the housing seating 17 and fix it inside it.

According to some embodiments, the detection device(s) 18 can be positioned in a stable manner in the respective housing seating(s) 17 by means of a clamping member 21, for example a spring or other elastic element.

According to further embodiments, the method also provides a step of bending the support body 11 with the heating elements 15 and possibly the detection devices 18 integrated inside it, in at least one bending zone 23, so as to obtain a heating device 10 in the shape of an "L", a "J", a "C" or a "U".

According to some embodiments, the method provides to make two bending zones 23a, 23b in distinct positions along the longitudinal axis X.

It is clear that modifications and/or additions of parts may be made to the heating device 10 and corresponding production method as described heretofore, without departing from the field and scope of the present invention.

It is also clear that, although the present invention has been described with reference to some specific examples, a person of skill in the art shall certainly be able to achieve many other equivalent forms of heating device 10 and corresponding production method, having the characteristics as set forth in the claims and hence all coming within the field of protection defined thereby.

## Claims

1. Heating device for a liquid, comprising:
- a support body (11), which develops along a longitudinal axis (X), and is provided with at least three through holes, one central and two lateral, which develop parallel and adjacent to each other along said longitudinal axis (X), defining a central channel (12) for the passage of the liquid to be heated and two lateral compartments (13, 14);
- at least one heating element (15) disposed in at least one of said lateral compartments (13, 14);
**characterized in that** said support body (11) is made as a single block and comprises a continuous external surface (22) and an internal surface (19), which delimits said central channel (12) and, during use, is directly in contact with said liquid to be heated.

2. Heating device as in claim 1, **characterized in that** said support body (11) is made of copper.

3. Heating device as in claim 1, **characterized in that** said support body (11) is made of aluminum.

4. Heating device as in any claim hereinbefore, **characterized in that** said support body (11) comprises a housing seating (17) which develops parallel to said longitudinal axis (X) and a temperature detection device (18) disposed inside said housing seating (17).

5. Heating device as in claim 4, **characterized in that** said support body (11) comprises two or more housing seatings (17) disposed on the same side or on opposite sides of said central channel (12).

6. Heating device as in any claim hereinbefore, **characterized in that** said central channel (12) comprises protruding portions (20) which protrude toward the inside with respect to said internal surface (19) and configured to increase the usable heat exchange surface and facilitate the accumulation of limescale on them.

7. Heating device as in any claim hereinbefore, **characterized in that** it comprises at least one bending zone (23) along said longitudinal axis (X) which defines at least a first segment (24) and a second segment (25) disposed angled with respect to each other.

8. Method to produce a flow through heating device (10) for a liquid, comprising:
- extruding a support body (11) having an oblong development along a longitudinal axis (X), with at least three through holes, one central and two lateral, disposed parallel and adjacent to each other along said longitudinal axis (X), and defining a central channel (12) for the passage of the liquid to be heated, and two lateral compartments (13, 14), wherein said support body (11) comprises a continuous external surface (22) and an internal surface (19), which delimits said central channel (12), located during use directly in contact with said liquid to be heated;
- inserting at least one heating element (15) into at least one of said lateral compartments (13, 14);
- filling the space of each lateral compartment (13, 14) around said at least one heating element (15) with a conductive filling material (16), and heat-treating said support body (11) with said at least one heating element (15) and said filling material (16) disposed therein to obtain a single piece component.

9. Method as in claim 8, **characterized in that** during the extrusion of said support body (11) it provides a step in which, in said support body (11), a through channel (17a) or a groove (17b) is made which develops parallel to said longitudinal axis (X), to define a housing seating (17) for at least one detection device (18).

10. Method as in claim 8, **characterized in that** it provides to make two or more housing seatings (17) located on the same side or on opposite sides of said central channel (12).

11. Method as in claim 9 or 10, **characterized in that** it provides to insert at least one detection sensor (18) into said at least one housing seating (17) and to clamp it in the latter by means of a clamping member (21, 27).

12. Method as in claim 11, **characterized in that** it also provides a step of bending the support body (11), with the heating elements (15) and possibly the detection devices (18) integrated inside it, so as to obtain a heating device (10) in the shape of an "L", a "J", a "C" or a "U", or suchlike.

13. Machine for preparing beverages comprising at least one heating device (10) as in any of the claims from 1 to 7.
